(19) Europäisches Patentamt
European Patent Office
Office européen des brevets

(11) EP 4 296 761 A1

(12) EUROPEAN PATENT APPLICATION
published in accordance with Art. 153(4) EPC

(43) Date of publication:
**27.12.2023 Bulletin 2023/52**

(21) Application number: **22791565.9**

(22) Date of filing: **31.03.2022**

(51) International Patent Classification (IPC):
***G02C 7/04*** (2006.01) ***C08F 226/10*** (2006.01)
***C08F 230/02*** (2006.01) ***C08F 230/08*** (2006.01)

(52) Cooperative Patent Classification (CPC):
**C08F 226/10; C08F 230/02; C08F 230/08; G02C 7/04**

(86) International application number:
**PCT/JP2022/016397**

(87) International publication number:
**WO 2022/224790 (27.10.2022 Gazette 2022/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.04.2021 JP 2021071563**

(71) Applicant: **NOF Corporation**
**Shibuya-ku**
**Tokyo 150-6019 (JP)**

(72) Inventors:
- **GOTANDA, Ryuya**
  **Kawasaki-shi, Kanagawa 210-0865 (JP)**
- **IWAKIRI, Norio**
  **Kawasaki-shi, Kanagawa 210-0865 (JP)**

(74) Representative: **HWP Intellectual Property**
**Ridlerstraße 35**
**80339 München (DE)**

# (54) MONOMER COMPOSITION FOR CONTACT LENSES, POLYMER OF SAID MONOMER COMPOSITION, CONTACT LENS, AND METHOD FOR PRODUCING SAID CONTACT LENS

(57) Provided are a monomer composition for a contact lens using a silicone compound having a small molecular weight, a polymer of the composition, and a contact lens using the polymer, and with the composition, it is possible to produce a contact lens good in oxygen permeability, mechanical strength, transparency, and durability, and excellent in wearing feeling, Specifically, provided are a composition containing (A) a phosphorylcholine group-containing methacrylic ester monomer; (B) a siloxanyl group-containing itaconic acid diester monomer; (C) a specific hydrophilic monomer; (D) a siloxanyl group-containing (meth)acrylate, and (E) a specific crosslinking agent at a specific ratio, a polymer of the composition, and a contact lens using the polymer.

EP 4 296 761 A1

## Description

### TECHNICAL FIELD

The present invention relates to a monomer composition for a contact lens, a polymer of the monomer composition, as well as a contact lens containing the polymer and having a good wearing feeling due to high transparency and durability, and a production method for the contact lens.

### BACKGROUND ART

A conventional hydrogel contact lens is insufficient in oxygen supply amount to a cornea of an eye, and has a problem in safety when the lens is worn for a long time. A silicone hydrogel contact lens has been developed as a contact lens that overcomes the disadvantages and improves safety. However, in terms of a production method for the contact lens, there is a problem that a surface of the silicone hydrogel contact lens is difficult to be hydrophilic. In other words, in a case where the silicone hydrogel contact lens is produced by a cast molding method using a mold made of polypropylene, being a general production method for a soft contact lens, a silicone monomer as a raw material is polymerized in a state of being oriented at an interface with the mold, since the polypropylene is hydrophobic. As a result, a silicone polymer portion is present on the surface of the lens, and therefore, hydrophilicity of the surface of the lens is lowered.

In a case where the hydrophilicity of the surface of the soft contact lens is not sufficient, cloudiness of the lens due to lipid and protein adhesion and eye diseases due to deposits may occur. Therefore, in the silicone hydrogel contact lens having an insufficient hydrophilicity, the surface of the lens is coated with a plasma gas or a hydrophilic polymer, or formed with a surface graft polymer by the hydrophilic monomer after formation of the lens. However, surface treatments described above are undesirable in mass production, since the treatments require more apparatuses and steps to produce the soft contact lens than in a case where no surface treatment is required.

Patent Literature 1 discloses a method for producing a lens from a silicone hydrogel composition that contains a silicone monomer having a (meth)acryloyl group, a hydrophilic monomer having a vinyl group, a crosslinking monomer, and a polymerization initiator having a 10-hour half-life temperature of 70°C to 100°C. Patent Literature 1 aims to improve hydrophilicity of a surface of the lens by using polymerizability difference among raw material monomers, but still may not obtain satisfactory hydrophilicity.

Patent Literature 2 discloses a silicone hydrogel contact lens obtained from a composition that contains 2-methacryloyloxyethyl phosphorylcholine (MPC), a dimethacryloyl silicone macromer, and (3-methacryloxy-2-hydroxypropyloxy)propylbis(trimethylsiloxy)methylsilane. However, the contact lens according to Patent Literature 2 has a problem that oxygen permeability of the surface of the lens decreases although improvement in the hydrophilicity of the surface of the lens is observed.

Patent Literatures 3 and 4 disclose a composition that contains a siloxanyl group-containing itaconic acid diester monomer having a primary hydroxyl group, and the MPC, and describe that a polymer of the composition can be used for a contact lens. The contact lens according to Patent Literature 3 has obtained good results in terms of the hydrophilicity and the oxygen permeability of the surface of the lens, and the contact lens according to Patent Literature 4 has also obtained good results in terms of breaking elongation and peeling property of the surface of the lens in addition to the hydrophilicity and the oxygen permeability.

### CITATION LIST

### PATENT LITERATURE

Patent Literature 1: WO 2015/001811 A
Patent Literature 2: JP 2014-089477 A
Patent Literature 3: WO 2018/135421 A
Patent Literature 4: WO 2020/054711 A

### SUMMARY OF INVENTION

### TECHNICAL PROBLEM

However, although each contact lens according to Patent Literatures 3 and 4 is good in terms of the hydrophilicity and the oxygen permeability of the surface of the lens, the transparency of the lens may decrease in a case where a

thick contact lens used for vision correction with high myopia is produced, since the lens contains a large amount of highly hydrophobic silicone compounds. In order to improve the transparency, a technique using a silicone compound having a lower molecular weight can be exemplified, but the lens may have a wearing feeling degraded due to deterioration of the oxygen permeability and mechanical strength by the technique alone. Further, in general, it is known that the silicone hydrogel contact lens is susceptible to hydrolysis, and has the mechanical strength decreasing due to a long-term storage. The thick contact lens is susceptible to this, and the wearing feeling of the contact lens after the long-term storage may be deteriorated.

Therefore, an object of the present invention is to provide a monomer composition for a contact lens using a silicone compound having a small molecular weight, and with the composition, it is possible to produce a contact lens good in oxygen permeability, mechanical strength, transparency, and durability and excellent in wearing feeling. Further, another object of the present invention is to provide a polymer for a contact lens obtained by polymerizing the composition. Moreover, still another object of the present invention is to provide a contact lens using the polymer and a production method for the contact lens.

SOLUTION TO PROBLEM

As a result of intensive studies, the present inventors have found that all of the objects described above can be achieved by using a monomer composition that contains two hydrophilic monomers, the siloxanyl group-containing itaconic acid diester monomer, a siloxanyl group-containing silicone monomer having a specific molecular weight, and a specific crosslinking agent as raw materials for a contact lens and setting these monomers to a specific composition ratio, and thus the present invention has been completed.

In other words, the present invention provides a monomer composition for a contact lens that contains (A) a phosphorylcholine group-containing methacrylic acid ester monomer represented by Formula (1); (B) a siloxanyl group-containing itaconic acid diester monomer represented by Formula (2); (C) one or more hydrophilic monomers selected from the group consisting of N-vinylpyrrolidone, hydroxyethyl(meth)acrylate, hydroxypropyl(meth)acrylate, hydroxybutyl(meth)acrylate, ethylene glycol monovinyl ether, and diethylene glycol monovinyl ether; (D) a siloxanyl group-containing (meth)acrylate represented by Formula (3), and (E) one or more crosslinking agents selected from the group consisting of ethylene glycol dimethacrylate, diethylene glycol dimethacrylate, triethylene glycol dimethacrylate, tetraethylene glycol dimethacrylate, and siloxanyl group-containing dimethacrylate represented by Formula (4), in which a content ratio of the component (A) is 5 to 25 mass%, a content ratio of the component (B) is 5 to 30 mass%, a content ratio of the component (C) is 15 to 45 mass%, a content ratio of the component (D) is 15 to 40 mass%, and a content ratio of the component (E) is 0.2 to 2.5 mass%, with respect to 100 mass% of the components (A) to (E) in total in the composition.

[Chem. 1]

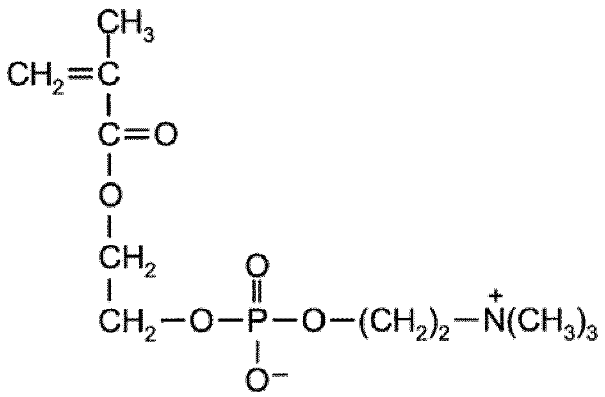

(1)

[Chem. 2]

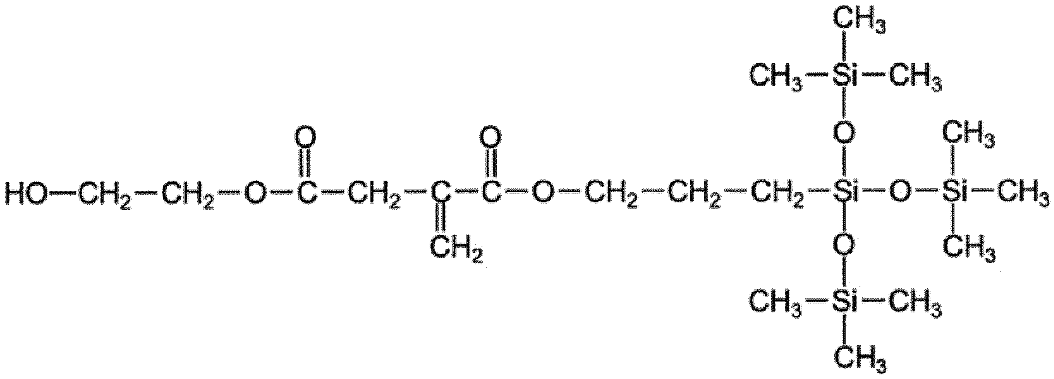

(2)

[Chem. 3]

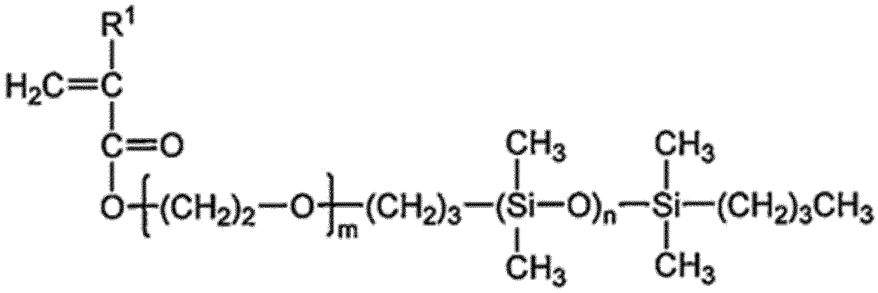

(3)

Wherein $R^1$ is hydrogen or a methyl group. m is 0 or 1, and n is 3 to 9.

[Chem. 4]

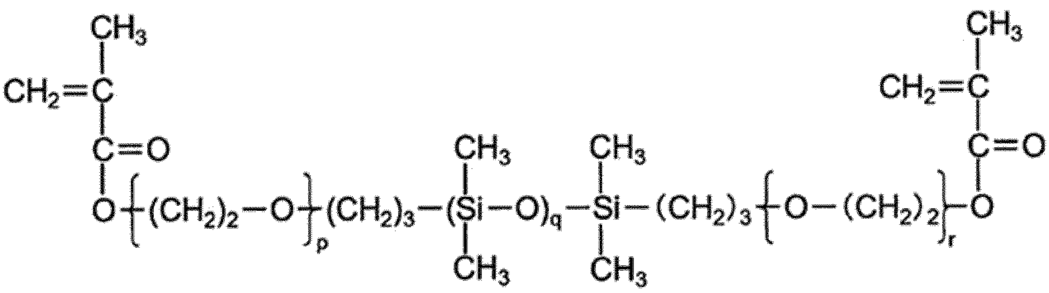

(4)

Wherein p and r are 0 or 1 and q is 5 to 20.

Further, according to the present invention from another viewpoint, provided is a polymer for a contact lens that is a polymer of the monomer composition for a contact lens of the present invention.

Moreover, according to the present invention from another viewpoint, provided are a contact lens having a hydrate of the polymer for the contact lens of the present invention, and a production method for the contact lens.

ADVANTAGEOUS EFFECTS OF INVENTION

Since the monomer composition for a contact lens of the present invention essentially contains the components (A) to (E) at a specific ratio, a contact lens high in transparency and durability and good in wearing feeling can be obtained by using the polymer of the composition. Further, according to the production method for the contact lens of the present invention, a contact lens excellent in performance described above can be produced. The contact lens of the present invention is a silicone hydrogel soft contact lens.

DESCRIPTION OF EMBODIMENTS

Hereinafter, the present invention will be described in more detail.

The monomer composition for a contact lens of the present invention is a composition that contains (A) the phosphorylcholine group-containing methacrylic acid ester monomer represented by Formula (1) [a component (A)]; (B) the siloxanyl group-containing itaconic acid diester monomer represented by Formula (2) [a component (B)]; (C) the one or more hydrophilic monomers selected from the N-vinylpyrrolidone, the hydroxyethyl(meth)acrylate, the hydroxypropyl(meth)acrylate, hydroxybutyl(meth)acrylate, the ethylene glycol monovinyl ether, and the diethylene glycol monovinyl ether [a component (C)]; (D) the siloxanyl group-containing (meth)acrylate represented by Formula (3) [a component (D)], and (E) the one or more crosslinking agents selected from the ethylene glycol dimethacrylate, the diethylene glycol dimethacrylate, the triethylene glycol dimethacrylate, the tetraethylene glycol dimethacrylate, and the siloxanyl group-containing dimethacrylate represented by Formula (4) [a component (E)] at a specific ratio. Hereinafter, the monomer composition for a contact lens of the present invention may also be simply referred to as the composition of the present invention.

The composition of the present invention may further contain one or more components selected from (F) a monomer other than the (A) to (E) described above [a component (F)], and (G) a solvent having a hydroxyl group [a component (G)] in a specific amount. Further, the composition of the present invention may contain (H) a polymerization initiator [a component (H)].

The composition of the present invention is a uniform transparent liquid that contains the components (A) to (E) described above as essential components and the components (F) to (H) as optional components.

Component (A); phosphorylcholine group-containing methacrylic acid ester monomer

The component (A) is the phosphorylcholine group-containing methacrylic acid ester monomer represented by Formula (1), specifically, the 2-methacryloyloxyethyl phosphorylcholine (MPC). By containing the component (A), it is possible to improve the hydrophilicity and lubricity of the surface of the contact lens produced from the polymer of the composition of the present invention.

[Chem. 5]

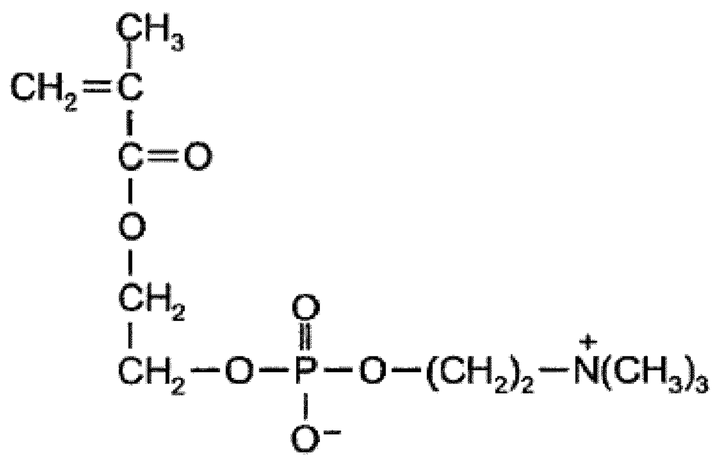

(1)

A content of the component (A) is 5 to 25 mass%, preferably 8 to 20 mass%, and more preferably 8 to 18 mass%, with respect to 100 mass% of the components (A) to (E) in total in the composition of the present invention. In a case where the content of the component is less than 5 mass%, sufficient hydrophilicity of the surface of the contact lens may not be obtained. In a case where the content of the component is more than 25 mass%, it is difficult to dissolve the component (A) in the composition, and the oxygen permeability of the contact lens may decrease.

Component (B); siloxanyl group-containing itaconic acid diester monomer

The component (B) is the siloxanyl group-containing itaconic acid diester monomer represented by Formula (2). The component (B) is a component that improves the oxygen permeability and the transparency of the contact lens of the present invention.

[Chem. 6]

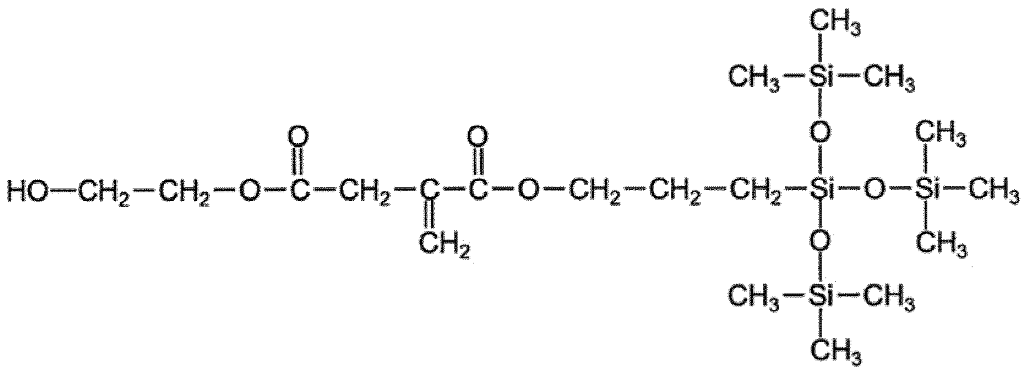

(2)

A content of the component (B) is 5 to 30 mass%, preferably 5 to 25 mass%, and more preferably 10 to 25 mass%, with respect to 100 mass% of the components (A) to (E) in total in the composition of the present invention. In a case where the content of the component is less than 5 mass%, it may be difficult to dissolve the component (A) in the composition, or the transparency of the contact lens may decrease. In a case where the content of the component is more than 30 mass%, the mechanical strength of the contact lens may decrease.

Component (C); hydrophilic monomer

The component (C) is the one or more hydrophilic monomers selected from the group consisting of the N-vinylpyrrolidone, the hydroxyethyl(meth)acrylate, the hydroxypropyl(meth)acrylate, the hydroxybutyl(meth)acrylate, the ethylene glycol monovinyl ether, and the diethylene glycol monovinyl ether. The component (C) is a component that improves the mechanical strength of the contact lens of the present invention and the hydrophilicity of the surface of the contact lens.

Specific examples of the component (C) include the N-vinylpyrrolidone, 2-hydroxyethyl(meth)acrylate, 2-hydroxypropyl(meth)acrylate, 4-hydroxybutyl(meth)acrylate, 2-hydroxybutyl(meth)acrylate, the ethylene glycol monovinyl ether, and diethylene glycol monovinyl ether. The component (C) may be any one of these monomers or a mixture of two or more of the monomers.

In the present description, the "(meth)acrylate" and the "(meth)acrylic acid ester" are intended to mean acrylate and/or methacrylate, acrylic acid ester and/or methacrylic acid ester, respectively.

A content of the component (C) is 15 to 45 mass%, preferably 20 to 40 mass%, and more preferably 20 to 35 mass%, with respect to 100 mass% of the components (A) to (E) in total in the composition of the present invention. In a case where the content of the component is less than 15 mass%, the hydrophilicity of the surface of the contact lens may become insufficient; and in a case where the content of the component is more than 45 mass%, the mechanical strength of the contact lens may decrease.

Component (D); siloxanyl group-containing (meth)acrylate

The component (D) is the siloxanyl group-containing (meth)acrylate represented by Formula (3). The component (D) is a component that improves the transparency of the contact lens of the present invention.

[Chem. 7]

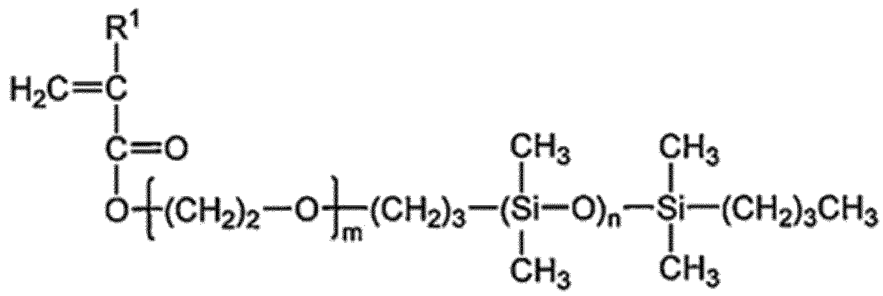

(3)

Wherein $R^1$ is hydrogen or a methyl group. m is 0 or 1, and n is 3 to 9.

A content of the component (D) is 15 to 40 mass%, preferably 15 to 35 mass%, and more preferably 20 to 35 mass%, with respect to 100 mass% of the components (A) to (E) in total in the composition of the present invention. In a case where the content of the component is less than 15 mass%, the oxygen permeability of the contact lens may decrease; and in a case where the content of the component is more than 40 mass%, a modulus of the contact lens may increase beyond an acceptable range during the long-term storage.

As the siloxanyl group-containing (meth)acrylate represented by Formula (3), a commercially available one can be used. Alternatively, for example, the siloxanyl group-containing (meth)acrylate manufactured by a method disclosed in JP 2014-031338 A may be used.

Component (E); crosslinking agent

The component (E) is the one or more crosslinking agents selected from the ethylene glycol dimethacrylate, the diethylene glycol dimethacrylate, the triethylene glycol dimethacrylate, the tetraethylene glycol dimethacrylate, and the siloxanyl group-containing dimethacrylate represented by Formula (4). The component (E) is a component that improves the oxygen permeability and the transparency of the contact lens of the present invention.

[Chem. 8]

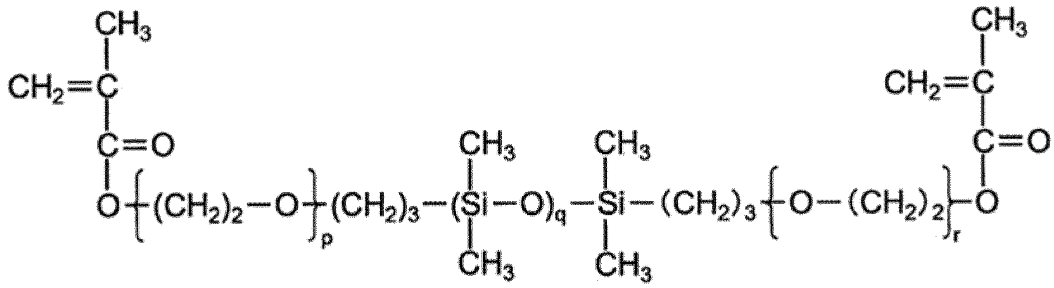

(4)

Wherein p and r are 0 or 1, respectively. q is 5 to 20.

A content of the component (E) is 0.2 to 2.5 mass%, preferably 0.2 to 2.2 mass%, and more preferably 0.5 to 2.2 mass%, with respect to 100 mass% of a total amount of the components (A) to (E) in the composition of the present invention. In a case where the content of the component is less than 0.2 mass%, the transparency and the oxygen permeability of the contact lens may become insufficient; and in a case where the content of the component is more than 2.5 mass%, the durability of the contact lens may become insufficient.

A content ratio of the component (D) to the component (E) is preferably 0.01 to 0.06, more preferably 0.01 to 0.04, and still more preferably 0.02 to 0.04 by a mass ratio [(E)/(D)]. By making the mass ratio to 0.01 to 0.06, it is possible to further improve the transparency and the durability of the contact lens of the present invention.

Component (F); monomer other than (A) to (E)

The component (F) is a monomer other than (A) to (E). The component (F) is an optional component, and can be blended for, for example, adjusting physical properties of the contact lens of the present invention.

Examples of the component (F) include monomers such as N-vinylpiperidine-2-one, N-vinyl-ε-caprolactam, N-vinyl-3-methyl-2-caprolactam, N,N-dimethylacrylamide, N,N-diethylacrylamide, acrylamide, N-isopropylacrylamide, acryloylmorpholine, N-vinyl-N-methylacetamide, N-vinylacetamide, N-vinylformamide, (meth)acrylic acid, 2-methacryloyloxyethylsuccinic acid, methyl(meth)acrylate, ethyl(meth)acrylate, butyl(meth)acrylate, methoxypolyethylene glycol methacrylate, (3-methacryloxy-2-hydroxypropyloxy)propylbis(trimethylsiloxy)methylsilane, and (3-methacryloxypropyl)trimethoxysilane. Further, examples of the component (F) also include crosslinking agents (monomers) such as ethylene glycol divinyl ether, diethylene glycol divinyl ether, triethylene glycol divinyl ether, methylene bisacrylamide, allyl methacrylate, (2-allyloxy)ethyl methacrylate, 2-(2-vinyloxyethoxy)ethyl acrylate, 2-(2-vinyloxyethoxy)ethyl methacrylate, and divinylbenzene. The component (F) may be any one of these monomers or a mixture of two or more of the monomers.

In a case where the component (F) is contained, a content of the component is preferably 20 parts by mass or less, more preferably 18 parts by mass or less, and still more preferably 15 parts by mass or less, with respect to 100 parts by mass of the total amount of the components (A) to (E) in the composition of the present invention. In a case where the crosslinking agent described above is contained in the component (F), the contents of the crosslinking agent

is preferably 2 parts by mass or less, and more preferably 1.5 parts by mass or less, with respect to 100 parts by mass of the total amount of the components (A) to (E). As the content of the component (F) is more than 20 parts by mass, the transparency and the durability of the contact lens may decrease.

Component (G); solvent

The component (G) is the solvent having the hydroxyl group. The component (G) is an optional component, and may be blended for improving solubility of the component (A) in the composition of the present invention. Specifically, blending the component (G) has an advantage that a dissolution rate of the component (A) in the composition of the present invention increases and the dissolution of the component is facilitated. Examples of the component (G) include alcohols and carboxylic acids. Examples of the alcohols include ethanol, 1-propanol, 2-propanol, 1-butanol, 2-butanol, tert-butanol, 1-pentanol, 2-pentanol, tert-amyl alcohol, 1-hexanol, 1-octanol, 1-decanol, and 1-dodecanol. Examples of the carboxylic acids include glycolic acid, lactic acid, and acetic acid. The component (G) may be any one of these solvents or a mixture of two or more of the solvents. In terms of improving the dissolution rate of the component (A) and in terms of pH stability of the composition of the present invention, it is preferable to blend one or more components selected from the ethanol, the 1-propanol, the 2-propanol, and the 1-hexanol as the component (G).

In a case where the component (G) is contained, a content of the component is not particularly limited, but is preferably 30 parts by mass or less, more preferably 25 parts by mass or less, and still more preferably 20 parts by mass or less, with respect to 100 parts by mass of the total amount of the components (A) to (E) in the composition of the present invention. As the content of the component (G) is more than 30 parts by mass, the oxygen permeability and the mechanical strength of the contact lens may decrease.

The composition of the present invention may be a composition containing (H) the polymerization initiator [the component (H)]. In a case where the component (H) is contained, it is necessary to pay attention to, for example, storage of the composition of the present invention, but there is an advantage that the polymer for the contact lens of the present invention can be easily obtained with a stable quality only by such as heating the composition of the present invention. The component (H) is not particularly limited, but a known thermal polymerization initiator or photopolymerization initiator can be used.

Examples of the thermal polymerization initiator include an azo polymerization initiator such as 2,2'-azobisisobutyronitrile, dimethyl 2,2-azobis(2-methylpropionate)2,2'-azobis[2-(2-imidazoline-2-yl)propane]dihydrochloride, 2,2'-azobis(2,4-dimethylvaleronitrile), 2,2'-azobis[2-(2-imidazoline-2-yl)propane]disulfite dihydrate, 2,2'-azobis(2-methylpropionamidine)dihydrochloride, 2,2'-azobis[N-(2-carboxyethyl)-2-methylpropionamidine]dihydrate, 2,2'-azobis[2-(2-imidazoline-2-yl)propane], 2,2'-azobis(1-imino-1-pyrrolidino-2-methylpropane)dihydrochloride, 2,2'-azobis[2-methyl-N-{ 1,1-bis(hydroxymethyl)-2-hydroxyethyl}propionamide], 2,2'-azobis[2-methyl-N-(2-hydroxyethyl)propionamide], 2,2'-azobis(2-methylpropionamidine)dihydrochloride, and 2,2'-azobis[2-methyl-N-(2-hydroxyethyl)propionamide], and a peroxide polymerization initiator such as benzoyl peroxide, t-butyl hydroperoxide, cumene hydroperoxide, lauroyl peroxide, t-butyl peroxyhexanoate, and 3,5,5-trimethylhexanoyl peroxide. Any one or two or more of these thermal polymerization initiators may be blended as the component (H).

Examples of the photopolymerization initiator include 1-hydroxycyclohexyl phenyl ketone, 2-hydroxy-2-methyl-1-phenyl-propane-1-one, bis(2,6-dimethoxybenzoyl)-2,4,4-trimethylpentylphosphine oxide, bis(2,4,6-trimethylbenzoyl)-phenylphosphine oxide, 2,4,6-trimethylbenzyldiphenylphosphine oxide, 2,4,6-trimethylbenzoyldiphenylphosphine oxide, benzoin methyl ester, camphorquinone, and ethyl-4-(N,N-dimethylamino)benzoate. Further, examples of the photopolymerization initiator shown by a trade name include Irgacure 819, Irgacure 1700, Irgacure 1800, Irgacure 819, Irgacure 1850, Darocur 1173, and Darocur 2959. Any one or two or more of these photopolymerization initiators may be blended as the component (H).

In a case where the component (H) is contained, the content of the component is preferably 0.1 to 3 parts by mass, and more preferably 0.1 to 2 parts by mass, with respect to 100 parts by mass of the total amount of the components (A) to (E) in the composition of the present invention. In a case where the content of the component is less than 0.1 parts by mass, polymerizability of the monomer in the composition is insufficient, and the advantage of the blending of the component (H) may not be obtained. In a case where the content of the component is more than 3 parts by mass, extraction and removal of a reaction decomposition product of the component (H) may become insufficient when the contact lens is produced by washing the polymer for the contact lens to be obtained by polymerization.

The production method for the composition of the present invention is not particularly limited, and the composition can be produced by putting each component in any order or all at once into a stirring (mixing) apparatus, and stirring and mixing each component at 40°C or less until the each component become uniform. However, when the component (H) is contained, in order to avoid initiation of a polymerization reaction during mixing, the mixing is preferably performed at a temperature of 40°C or less that is lower by 10°C or more than a 10-hour half-life temperature of the initiator in a case where the component (H) is the thermal polymerization initiator; and the mixing is preferably performed while light is being shielded in a case where the component (H) is the photopolymerization initiator.

The composition of the present invention may contain components other than the components described above as long as the objects of the present invention are not hindered. Examples of the other components include a polymerizable ultraviolet absorber and a polymerizable pigment as a colorant. By blending the ultraviolet absorber, the contact lens of the present invention can reduce burden on the eyes due to an ultraviolet ray such as sunlight. Further, by blending the pigment, the contact lens of the present invention can be a color contact lens. Contents of the other components in the composition of the present invention are preferably 7 parts by mass or less, more preferably 5 parts by mass or less, and still more preferably 3 parts by mass or less, with respect to 100 parts by mass of the total amount of the components (A) to (E) in the composition of the present invention.

Next, an embodiment of a production method for the polymer for the contact lens of the present invention will be described. Note that, a production method shown below is one embodiment for obtaining the polymer for the contact lens of the present invention, and the polymer for the contact lens of the present invention is not limited to a polymer to be obtained by the production method. Hereinafter, unless otherwise specified, a case of the "composition" refers to the composition of the present invention, and a case of the "polymer" refers to the polymer for the contact lens of the present invention.

The polymer is produced by using a mold (die) made of polypropylene or the like and having a hydrophobic surface, filling the mold with the composition, and polymerizing the composition. In a case of a composition containing no component (H), a polymerization initiator similar to the component (H) is added to the composition to be in about the same blending amount of the component (H), and filled in the mold.

In a case of polymerization with the thermal polymerization initiator, a reaction is performed at a temperature between 45°C and 140°C suitable for the thermal polymerization initiator contained for 1 hour or more. In a case of the polymerization with the photopolymerization initiator, a reaction is performed at an irradiance of 0.3 $mW/cm^2$ or more for 5 minutes or more by irradiation with the ultraviolet ray having a wavelength suitable for the photopolymerization initiator contained. After completion of the polymerization, the polymer produced is taken out from the mold.

A polymerization atmosphere is not particularly limited, but an inert gas atmosphere such as nitrogen or argon is preferable in terms of improvement in a polymerization rate. Examples of a method for forming the inert gas atmosphere include a method for passing an inert gas through the composition and a method for making a place where the composition is filled in the mold in the atmosphere.

A pressure in the mold may be an atmospheric pressure to a slight pressure, and in a case where the polymerization is performed in the inert gas atmosphere, the pressure is preferably 1 $kgf/cm^2$ or less by a gauge pressure.

The contact lens of the present invention is the silicone hydrogel contact lens, and the hydrate of the polymer. Here, the "hydrate" means that water is contained, and a contact lens being in a hydrogel form due to the polymer containing water is the contact lens of the present invention, that is, the silicone hydrogel contact lens of the present invention. Since the polymer contains, for example, unreacted substances, and by-products, as well as optionally (G) the solvent, the polymer is purified by, for example, washing before being hydrated.

In the present description, the "silicone hydrogel" refers to a hydrogel having a silicone moiety (a siloxane bond) in the polymer. Since the composition of the present invention contains the component (B) being a siloxanyl group-containing monomer, and the component (D), the polymer of the composition has the silicone moiety in the polymer, and can form the silicone hydrogel by hydrating the polymer (causing the polymer to contain water).

Next, an embodiment of the production method for the contact lens of the present invention will be described. Note that, a production method shown below is one embodiment for obtaining the contact lens of the present invention, and the contact lens of the present invention is not limited to a contact lens obtained by the production method. Hereinafter, unless otherwise specified, a case of the "contact lens" refers to the contact lens of the present invention.

The polymer taken out from the mold is purified by washing with a solvent to remove unreacted substances such as unreacted monomers and impurities. As the solvent, for example, water, methanol, ethanol, 1-propanol, 2-propanol, or a mixture thereof can be used. The washing can be performed, for example, by immersing the polymer in the alcohol described above at 10 to 40°C for 10 minutes to 5 hours and then immersing the polymer in the water for 10 minutes to 5 hours. Further, between washing with the alcohol and washing with the water, washing by immersing the polymer for 10 minutes to 5 hours in a hydrous alcohol having an alcohol concentration of 20 to 50 wt% may be added. The water is preferably pure water such as distilled water, ion-exchanged water, or RO water.

The contact lens can be obtained by immersing the polymer purified by the washing in physiological saline and hydrating the polymer to have a water content in a predetermined amount. As the physiological saline, borate buffered physiological saline or phosphate buffered physiological saline may be used. Since the physiological saline is used in a storage solution for a soft contact lens, the polymer may be immersed and hydrated in the storage solution for the soft contact lens. An osmotic pressure of the physiological saline is preferably 250 to 400 mOms/kg from a viewpoint of the hydration.

EXAMPLES

Hereinafter, the present invention will be specifically described with examples, but the present invention is not limited to these examples.

Components constituting the compositions in the examples and comparative examples will be shown below.

(A); phosphorylcholine group-containing methacrylic acid ester monomer
MPC: (2-methacryloyloxyethyl)phosphorylcholine
(B); siloxanyl group-containing itaconic acid diester monomer

- ETS: compound of Formula (2)

(C); hydrophilic monomer

- NVP: N-vinylpyrrolidone
- HEMA: 2-hydroxyethyl methacrylate
- HPMA: 2-hydroxypropyl methacrylate
- HBMA: 2-hydroxybutyl methacrylate
- EGMV: ethylene glycol monovinyl ether
- DEGMV: diethylene glycol monovinyl ether

(D); siloxanyl group-containing methacrylate

- mPDMS3-9: compound of Formula (3) ($R^1$ is a methyl group, m = 0, n = 8, and Mn = 800)

(E); crosslinking agent

- EGDMA: ethylene glycol dimethacrylate
- 2EGDMA: diethylene glycol dimethacrylate
- 3EGDMA: triethylene glycol dimethacrylate
- 4EGDMA: tetraethylene glycol dimethacrylate
- dmPDMS5-20: compound of Formula (4) (p = r = 0, q = 10, and Mn = 1000)

(F); monomer other than (A) to (E)

- SiGMA: (3-methacryloxy-2-hydroxypropyloxy)propylbis(trimethylsiloxy)methylsilane
- mPDMS15-20: compound of Formula (5) (m = 0, n = 17, and Mn = 1500)

[Chem. 9]

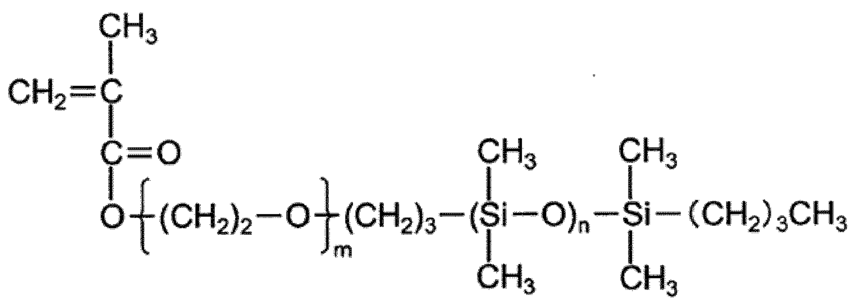

(5)

- MMA: methyl methacrylate
- TEGDV: triethylene glycol divinyl ether

(G); solvent

- NPA: 1-propanol (normal propanol)
- HeOH: 1-hexanol (normal hexanol)

(H); polymerization initiator

- AIBN: 2,2'-azobis(isobutyronitrile)
- I-819: bis(2,4,6-trimethylbenzoyl)-phenylphosphine oxide

Next, for example, each evaluation item and preparation of the contact lens will be described. A composition, a polymer, a contact lens, and a plate-shaped silicone hydrogel to be described later in each comparative example out of the present invention are also simply referred to as the composition, the polymer, the contact lens, and the plate-shaped silicone hydrogel as in the examples. The plate-shaped silicone hydrogel is obtained by purifying the polymer prepared by using a specific cell instead of a contact lens molding die to polymerize the composition. In other words, the plate-shaped silicone hydrogel is prepared to be different only in shape from a corresponding contact lens to have a shape suitable for a. modulus and d. durability evaluation described below. b. Oxygen permeability coefficient and c. Transparency were evaluated with the contact lens.

[a. Modulus]

The modulus of the plate-shaped silicone hydrogel (hereinafter, also abbreviated as SG) was measured according to JIS-K7127 by using a rupture strength analyzer BAS-3305(W) manufactured by YAMADEN CO., LTD. A load cell of 2N was used. As a measurement sample, a sample obtained by cutting the SG to a width of 2 mm was used, pulled at a speed of 1 mm/sec with a clamp gap of 6 mm, and measured for the modulus from an initial stress.

[b. Oxygen permeability coefficient]

The Oxygen permeability coefficient of the contact lens was measured according to a technique described in ISO18369-4. The contact lens having an Oxygen permeability coefficient of 70 or more was determined to be good.

[c. Transparency]

Light scattering was visually evaluated according to criteria below by using contact lenses prepared by changing the thickness of the polymer to be obtained, and making the thicknesses of the lenses after being swollen 100 ± 20 μm, 200 ± 20 μm, and 300 ± 20 μm.

⊙: the contact lenses of all thicknesses are clear
○: the light scattering is confirmed in the contact lens having the thickness of 300 ± 20 μm
△: the light scattering is confirmed in the contact lenses having the thicknesses of 200 ± 20 μm and 300 ± 20 μm
×: the light scattering is confirmed in the contact lenses of all thicknesses

[d. Durability]

The SG was subjected to heat treatment 10 times at 12 1°C for 20 minutes to prepare a long-term storage SG assumed to be stored for a long term by using an autoclave. Similarly to the method described above, the modulus of the long-term storage SG was measured, an increasing rate of the modulus was calculated from an equation below, and a value of the increasing rate of the modulus was determined according to criteria below.

$$[\text{Increasing rate of modulus}] = [\text{Modulus of long-term storage SG}]/[\text{Modulus of SG}]$$

⊙: 0.8 or more and less than 1.3
○: 1.3 or more and less than 1.5
△: 1.5 or more and less than 2.0
×: less than 0.8 or 2.0 or more

[Example 1]

The MPC of 0.70 g (10.0 mass%), the HPMA of 1.00 g (14.3 mass%), the ETS of 1.40 g (20.0 mass%), and the NPA of 1.05 g (15.0 parts by mass) were mixed in a container, and stirred at a room temperature until the MPC was dissolved. Moreover, the NVP of 2.10 g (30.0 mass%), the mPDMS3-9 of 1.75 g (25.0 mass%), the EGDMA of 0.049 g (0.7 mass%), the TEGDV of 0.042 g (0.6 parts by mass), the AIBN of 0.035 g (0.5 parts by mass) were added to a

container, and stirred at the room temperature to be uniform, and a composition was obtained. A portion of the composition was filled in a lens molding die. Further, a portion of the composition was filled in a cell of 25 mm × 70 mm × 0.2 mm sandwiched between two polypropylene plates each with a polyethylene terephthalate sheet having a thickness of 0.1 mm as a spacer. The lens molding die and the cell filled with the composition were placed in an oven, and were subjected to nitrogen substitution in the oven. Next, the temperature in the oven was raised to 80°C and maintained at 80°C for 12 hours to polymerize the composition, and polymers were obtained. Each of the polymers was taken out from the lens molding die and the cell, and polymers having two types of shapes were obtained. Both the polymers were immersed in a 50 vol% 2-propanol aqueous solution of 100 mL for 4 hours, and then purified by being immersed in ion-exchanged water of 100 mL for 4 hours to remove, for example, unreacted substances. Both the polymers after being purified were immersed in physiological saline described in ISO-18369-3 and swollen (hydrated) to prepare a contact lens and a plate-like silicone hydrogel (SG) different only in shape from the contact lens. The contact lens and the SG were divided into sizes and shapes suitable for the each evaluation described above, and the each evaluation was performed. A blending ratio of each of the components in the composition, polymerization conditions, and each evaluation result are shown in Table 1.

[Examples 2 to 5]

A contact lens and an SG of each of the examples were prepared in a similar manner as in Example 1 except that the blending ratio of the each of the components in the composition and the polymerization conditions were as shown in Table 1. In Example 5, the polymerization was performed in two stages, and the polymerization was performed under conditions of a first stage at a temperature of 55°C for 7 hours and a second stage at a temperature of 120°C for 2 hours. Further, the contact lens and the SG of the each of the examples were evaluated in the similar manner as in Example 1. Results are shown in Table 1.

[Example 6]

The MPC of 0.90 g (18.0 mass%), the ETS of 1.00 g (20.0 mass%), the HBMA of 0.79 g (15.8 mass%), and the HeOH of 1.00 g (20.0 parts by mass) were mixed in a container, and stirred at the room temperature until the MPC was dissolved. Moreover, the NVP of 0.75 g (15.0 mass%), the mPDMS3-9 of 1.5 g (30.0 mass%), the 4EGDMA of 0.060 g (1.2 mass%), the TEGDV of 0.030 g (0.6 parts by mass), the I-819 of 0.010 g (0.2 parts by mass) were added to a container, and stirred at the room temperature to be uniform, and a composition was obtained. A portion of the composition was filled in a lens molding die. Further, a portion of the composition was filled in a cell of 25 mm × 70 mm × 0.2 mm sandwiched between two polypropylene plates each with a polyethylene terephthalate sheet having a thickness of 0.1 mm as a spacer. The lens molding die and the cell filled with the composition were placed in a UV-LED irradiator (having an irradiation light wavelength of 405 nm), UV irradiation was performed at an irradiance of 1.5 mW/cm$^2$ for 30 minutes at the room temperature to polymerize the composition, and polymers were obtained. Each of the polymers was taken out from the lens molding die and the cell, and polymers having two types of shapes were obtained. Both the polymers were immersed in a 50 vol% 2-propanol aqueous solution of 100 mL for 4 hours, and then purified by being immersed in ion-exchanged water of 100 mL for 4 hours to remove, for example, unreacted substances. Both the polymers after being purified were immersed in the physiological saline described in ISO-18369-3 and swollen (hydrated) to prepare a contact lens and an SG different only in shape from the contact lens. The contact lens and the SG were divided into sizes and shapes suitable for the each evaluation described above, and the each evaluation was performed. A blending ratio of each of the components in the composition, polymerization conditions, and each evaluation result are shown in Table 1.

[Examples 7 and 8]

A contact lens and an SG of each of the examples were prepared in a similar manner as in Example 6 except that the blending ratio of the each of the components in the composition and the polymerization conditions were as shown in Table 1. Further, the contact lens and the SG of the each of the examples were evaluated in the similar manner as in Example 6. Results are shown in Table 1.

[Comparative Example 1]

The MPC of 0.50 g (10.0 mass%), the ETS of 1.25 g (25.0 mass%), the HBMA of 0.50 g (10.0 mass%), and the HeOH of 1.25 g (25.0 parts by mass) were mixed in a container, and stirred at the room temperature until the MPC was dissolved. Moreover, the NVP of 1.25 g (25.0 mass%), the mPDMS3-9 of 1.50 g (30.0 mass%), the TEGDV of 0.10 g (2.0 parts by mass), the AIBN of 0.025 g (0.5 parts by mass) were added to a container, and stirred at the room

temperature to be uniform, and a composition was obtained. A portion of the composition was filled in a lens molding die. Further, a portion of the composition was filled in a cell of 25 mm × 70 mm × 0.2 mm sandwiched between two polypropylene plates each with a polyethylene terephthalate sheet having a thickness of 0.1 mm as a spacer. The lens molding die and the cell filled with the composition were placed in an oven, and were subjected to nitrogen substitution in the oven. Next, the temperature in the oven was raised to 80°C and maintained at 80°C for 12 hours to polymerize the composition, and polymers were obtained. Each of the polymers was taken out from the lens molding die and the cell, and polymers having two types of shapes were obtained. Both the polymers were immersed in a 50 vol% 2-propanol aqueous solution of 100 mL for 4 hours, and then purified by being immersed in ion-exchanged water of 100 mL for 4 hours to remove, for example, unreacted substances. Both the polymers after being purified were immersed in the physiological saline described in ISO-18369-3 and swollen (hydrated) to prepare a contact lens and an SG different only in shape from the contact lens. The contact lens and the SG were divided into sizes and shapes suitable for the each evaluation described above, and the each evaluation was performed. A blending ratio of each of the components in the composition, polymerization conditions, and each evaluation result are shown in Table 2. The contact lens and the SG of Comparative Example 1 were poor in oxygen permeability and also inferior in transparency and durability as compared with the contact lens and the SG of the each of the examples.

[Comparative Example 2]

A contact lens and an SG were prepared in a similar manner as in Comparative Example 1 except that the blending ratio of the each of the components in the composition and the polymerization conditions were as shown in Table 2. Further, the contact lens and the SG of Comparative Example 2 were evaluated in the similar manner as in Comparative Example 1. Results are shown in Table 2. The SG (the plate-shaped silicone hydrogel) of Comparative Example 2 was remarkably inferior in durability as compared to the SG of the each of the examples.

[Comparative Example 3]

The MPC of 0.75 g (15.0 mass%), the ETS of 1.50 g (30.0 mass%), the HBMA of 1.20 g (24.0 mass%), and the HeOH of 1.25 g (25.0 parts by mass) were mixed in a container, and stirred at the room temperature until the MPC was dissolved. Moreover, the NVP of 1.00 g (20.0 mass%), the mPDMS3-9 of 0.5 g (10.0 mass%), the 4EGDMA of 0.050 g (1.0 mass%), the mPDMS15-20 of 1.00 g (20.0 parts by mass), the I-819 of 0.010 g (0.2 parts by mass) were added to a container, and stirred at the room temperature to be uniform, and a composition was obtained. A portion of the composition was filled in a lens molding die. Further, a portion of the composition was filled in a cell of 25 mm × 70 mm × 0.2 mm sandwiched between two polypropylene plates each with a polyethylene terephthalate sheet having a thickness of 0.1 mm as a spacer. The lens molding die and the cell filled with the composition were placed in a UV-LED irradiator (having an irradiation light wavelength of 405 nm), UV irradiation was performed at an irradiance of 1.5 mW/$cm^2$ for 30 minutes at the room temperature to polymerize the composition, and polymers were obtained. Each of the polymers was taken out from the lens molding die and the cell, and polymers having two types of shapes were obtained. Both the polymers were immersed in a 50 vol% 2-propanol aqueous solution of 100 mL for 4 hours, and then purified by being immersed in ion-exchanged water of 100 mL for 4 hours to remove, for example, unreacted substances. Both the polymers after being purified were immersed in the physiological saline described in ISO-18369-3 and swollen (hydrated) to prepare a contact lens and an SG different only in shape from the contact lens. The contact lens and the SG were divided into sizes and shapes suitable for the each evaluation described above, and the each evaluation was performed. A blending ratio of each of the components in the composition, polymerization conditions, and each evaluation result are shown in Table 2. The contact lens and the SG of Comparative Example 3 were poor in transparency and also remarkably inferior in durability as compared to the contact lens of the each of the examples.

[Comparative Example 4]

A contact lens and an SG were prepared in a similar manner as in Comparative Example 3 except that the blending ratio of the each of the components in the composition and the polymerization conditions were as shown in Table 2. Further, the contact lens and the SG of Comparative Example 4 were evaluated in the similar manner as in Comparative Example 3. Results are shown in Table 2. The contact lens and the SG of Comparative Example 4 were remarkably inferior in transparency and durability as compared to the contact lens and SG of the each of the examples.

[Table 1]

| | | | | Examples | | | | | | | |
|---|---|---|---|---|---|---|---|---|---|---|---|
| | | | | 1 | 2 | 3 | 4 | 5 | 6 | 7 | 8 |
| Compositions | Essential components (mass%) | A | MPC | 10.0 | 15.0 | 18.0 | 10.0 | 11.0 | 18.0 | 10.0 | 20.0 |
| | | B | ETS | 20.0 | 20.0 | 20.0 | 27.0 | 21.0 | 20.0 | 5.0 | 25.4 |
| | | C | NVP | 30.0 | 15.0 | 12.0 | 24.0 | 25.0 | 15.0 | 20.0 | |
| | | | HEMA | - | - | - | - | - | - | - | 15.0 |
| | | | HPMA | 14.3 | - | - | - | - | - | - | - |
| | | | HBMA | - | 18.8 | 21.2 | 10.0 | 3.6 | 15.8 | 22.5 | - |
| | | | EGMV | - | - | - | 10.0 | - | - | - | - |
| | | | DEGMV | - | - | - | - | 10.0 | - | - | - |
| | | D | mPDMS3-9 | 25.0 | 30.0 | 28.0 | 18.0 | 29.0 | 30.0 | 40.0 | 38.0 |
| | | E | EGDMA | 0.7 | - | - | - | - | - | - | - |
| | | | 2EGDMA | - | - | 0.8 | - | - | - | - | - |
| | | | 3EGDMA | - | - | - | 1.0 | - | - | - | - |
| | | | 4EGDMA | - | 1.2 | - | - | - | 1.2 | 2.0 | 1.6 |
| | | | dmPDMS5-20 | - | - | - | - | 0.4 | - | 0.5 | - |
| | Total amount of A to E (mass%) | | | 100.0 | 100.0 | 100.0 | 100.0 | 100.0 | 100.0 | 100.0 | 100.0 |
| | Optional components*1 (part by mass) | F | SiGMA | - | - | - | - | - | - | 10.0 | - |
| | | | mPDMS15-20 | - | - | - | - | - | - | - | - |
| | | | MMA | - | - | - | - | 10.0 | - | - | - |
| | | | TEGDV | 0.6 | 0.6 | 0.6 | | 1.4 | 0.6 | - | - |
| | | G | NPA | 15.0 | - | - | - | - | - | - | - |
| | | | HeOH | | 20.0 | 20.0 | 10.0 | 10.0 | 20.0 | 15.0 | 25.0 |
| | | H | AIBN | 0.5 | 0.5 | 0.5 | 0.5 | 0.5 | - | - | - |
| | | | 1-819 | - | - | - | - | - | 0.2 | 0.2 | 0.2 |
| | Total amount of A to H (part by mass) | | | 116.1 | 121.1 | 121.1 | 110.5 | 121.9 | 120.8 | 125.2 | 125.2 |

(continued)

| | | Examples | | | | | | | |
|---|---|---|---|---|---|---|---|---|---|
| | | 1 | 2 | 3 | 4 | 5 | 6 | 7 | 8 |
| Polymerization conditions | Methods | Thermal | Thermal | Thermal | Thermal | Thermal | Photo | Photo | Photo |
| | Temperatures (°C) | 80 | 80 | 80 | 80 | 55,120 | r.t. | r.t. | r.t. |
| | Irradiances ($mW/cm^2$)*2 | - | - | - | - | - | 1.5 | 1.5 | 1.5 |
| | Hours (hrs) | 12 | 12 | 12 | 12 | 7,2 | 0.5 | 0.5 | 0.5 |
| Evaluation*3 | a. Modulus [MPa] | 0.31 | 0.45 | 0.47 | 0.57 | 0.40 | 0.44 | 0.32 | 0.46 |
| | b. Oxygen permeability coefficient | 84 | 85 | 81 | 74 | 90 | 80 | 85 | 79 |
| | c. Transparency | ⊙ | ⊙ | ⊙ | ⊙ | ○ | ⊙ | ○ | ○ |
| | d. Durability (Modulus of long-term storage SG*4) | ⊙ (0.40) | ⊙ (0.53) | ⊙ (0.60) | ⊙ (0.78) | ○ (0.55) | ⊙ (0.52) | ○ (0.45) | ○ (0.61) |

* 1 Blending amount of optional component: with respect to 100 parts by mass of total amount of essential components (A to E)
*2 Irradiation light wavelength: 405 nm
*3 a. and d. were evaluated by using SG, as well as b. and c. was evaluated by using contact lens (CL)
*4 SG: plate-shaped silicone hydrogel

[Table 2]

| | | | | Comparative Examples | | | |
|---|---|---|---|---|---|---|---|
| | | | | 1 | 2 | 3 | 4 |
| Compositions | Essential components (mass%) | A | MPC | 10.0 | 10.0 | 15.0 | 8.0 |
| | | B | ETS | 25.0 | 15.0 | 30.0 | 24.5 |
| | | C | NVP | 25.0 | 15.0 | 20.0 | 10.0 |
| | | | HEMA | - | - | - | - |
| | | | HPMA | - | 10.0 | - | 5.0 |
| | | | HBMA | 10.0 | - | 24.0 | - |
| | | | EGMV | - | 5.0 | - | - |
| | | | DEGMV | - | - | - | - |
| | | D | mPDMS3-9 | 30.0 | 40.0 | 10.0 | 50.0 |
| | | E | EGDMA | - | - | - | - |
| | | | 2EGDMA | - | - | - | - |
| | | | 3EGDMA | - | - | - | - |
| | | | 4EGDMA | - | - | 1.0 | 2.0 |
| | | | dmPDMS5-20 | - | 5.0 | - | 0.5 |
| | Total amount of A to E (mass%) | | | 100.0 | 100.0 | 100.0 | 100.0 |
| | Optional components*’ (part by mass) | F | SiGMA | - | - | - | - |
| | | | mPDMS15-20 | - | - | 20.0 | - |
| | | | MMA | - | - | - | 10.0 |
| | | | TEGDV | 2.0 | - | - | - |
| | | G | NPA | | - | - | 15.0 |
| | | | HeOH | 25.0 | 20.0 | 25.0 | - |
| | | H | AIBN | 0.5 | 0.5 | - | - |
| | | | I-819 | - | - | 0.2 | 0.2 |
| | Total amount of A to H (part by mass) | | | 127.5 | 120.5 | 145.2 | 125.2 |
| Polymerization conditions | Methods | | | Thermal | Thermal | Photo | Photo |
| | Temperatures (°C) | | | 80 | 80 | r.t. | r.t. |
| | Irradiances ($mW/cm^2$)*2 | | | - | - | 1.5 | 1.5 |
| | Hours (hrs) | | | 12 | 12 | 0.5 | 0.5 |
| Evaluation*3 | a. Modulus [MPa] | | | 0.35 | 0.52 | 0.27 | 0.37 |
| | b. Oxygen permeability coefficient | | | 66 | 74 | 85 | 80 |
| | c. Transparency | | | △ | ⊙ | △ | × |
| | d. Durability (Modulus of long-term storage SG*4) | | | △ (0.64) | × (1.06) | × (0.57) | × (0.79) |

* 1 Blending amount of optional component: with respect to 100 parts by mass of total amount of essential components (A to E)
*2 Irradiation light wavelength: 405 nm
*3 a. and d. were evaluated by using SG, as well as b. and c. were evaluated by using CL
*4 SG: plate-shaped silicone hydrogel

## Claims

1. A monomer composition for a contact lens, the composition comprising:

(A) a phosphorylcholine group-containing methacrylic acid ester monomer represented by Formula (1) below:

[Chem. 1]

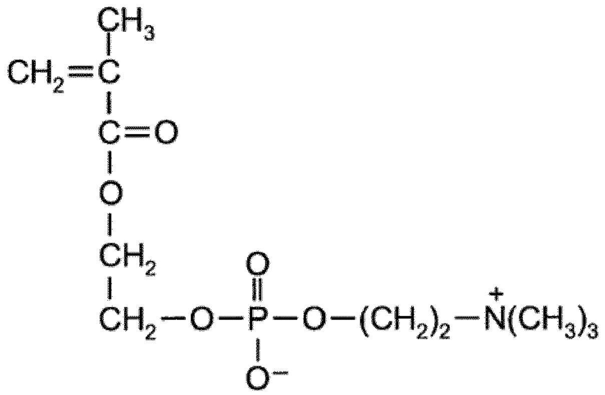

(1)

;

(B) a siloxanyl group-containing itaconic acid diester monomer represented by Formula (2) below:

[Chem. 2]

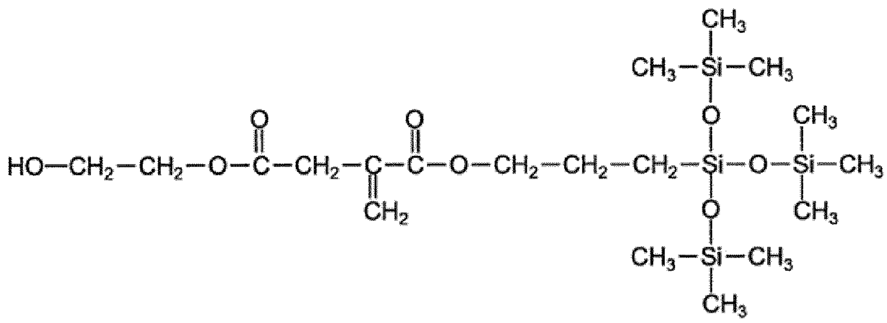

(2)

;

(C) one or more hydrophilic monomers selected from the group consisting of N-vinylpyrrolidone, hydroxyethyl(meth)acrylate, hydroxypropyl(meth)acrylate, hydroxybutyl(meth)acrylate, ethylene glycol monovinyl ether, and diethylene glycol monovinyl ether;

(D) a siloxanyl group-containing (meth)acrylate represented by Formula (3):

[Chem. 3]

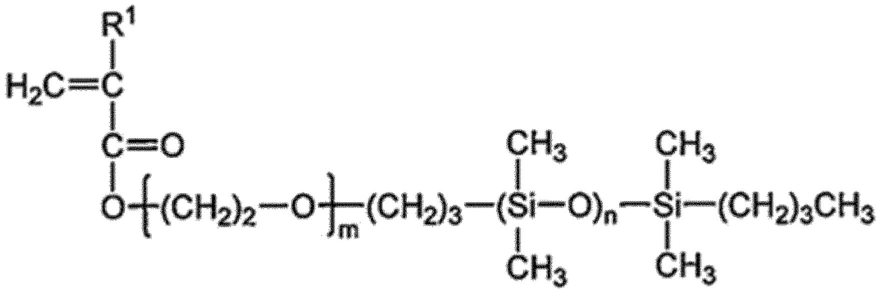

(3)

wherein $R^1$ is hydrogen or a methyl group,
m is 0 or 1 and n is 3 to 9, and

(E) one or more crosslinking agents selected from the group consisting of ethylene glycol dimethacrylate, diethylene glycol dimethacrylate, triethylene glycol dimethacrylate, tetraethylene glycol dimethacrylate, and siloxanyl group-containing dimethacrylate represented by Formula (4) below:

[Chem. 4]

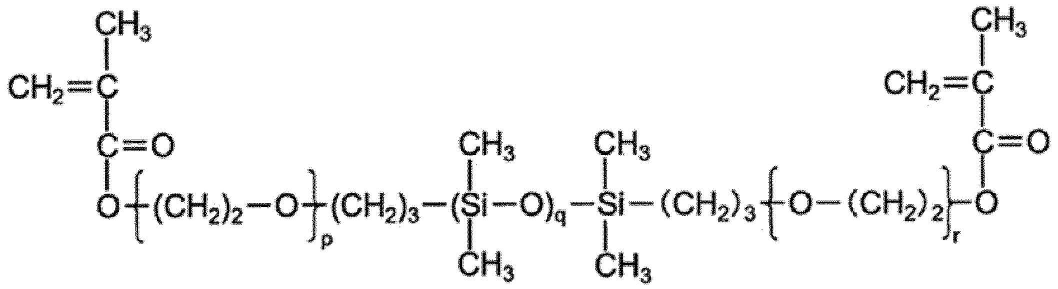

(4)

wherein p and r are 0 or 1 and q is 5 to 20,
wherein a content ratio of the component (A) is 5 to 25 mass%, a content ratio of the component (B) is 5 to 30 mass%, a content ratio of the component (C) is 15 to 45 mass%, a content ratio of the component (D) is 15 to 40 mass%, and a content ratio of the component (E) is 0.2 to 2.5 mass%, with respect to 100 mass% of the components (A) to (E) in total in the composition.

**2.** The monomer composition for a contact lens according to claim 1, wherein
the composition further contains (F) a monomer other than the (A) to the (E), and a content ratio of the component (F) is 20 parts by mass or less, with respect to 100 parts by mass of a total amount of the components (A) to (E) in the composition.

**3.** The monomer composition for a contact lens according to claim 1 or 2, wherein
the composition further contains (G) a solvent having a hydroxyl group, and a content ratio of the component (G) is 30 parts by mass or less, with respect to 100 parts by mass of the total amount of the components (A) to (E) in the composition.

**4.** A polymer for a contact lens, the polymer being a polymer of the monomer composition for a contact lens according to any one of claims 1 to 3.

**5.** A contact lens comprising:
a hydrate of the polymer for a contact lens according to claim 4.

**6.** A production method for a contact lens comprising steps of:

mixing the polymer for a contact lens according to claim 4 with one or more solvents selected from the group consisting of water, methanol, ethanol, 1-propanol, and 2-propanol, and purifying the polymer for the contact lens to obtain a purified polymer, and
immersing and hydrating the purified polymer in physiological saline.

**INTERNATIONAL SEARCH REPORT**

International application No.
**PCT/JP2022/016397**

**A. CLASSIFICATION OF SUBJECT MATTER**

***G02C 7/04***(2006.01)i; ***C08F 226/10***(2006.01)i; ***C08F 230/02***(2006.01)i; ***C08F 230/08***(2006.01)i
FI: G02C7/04; C08F226/10; C08F230/08; C08F230/02

According to International Patent Classification (IPC) or to both national classification and IPC

**B. FIELDS SEARCHED**

Minimum documentation searched (classification system followed by classification symbols)

G02C7/04; C08F226/10; C08F230/02; C08F230/08

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/135421 A1 (NOF CORPORATON) 26 July 2018 (2018-07-26) claims, paragraphs [0060], [0074]-[0075], [0078]-[0109], tables 1-5 | 1-6 |
| X | WO 2020/054711 A1 (NOF CORPORATON) 19 March 2020 (2020-03-19) claims, paragraphs [0063], [0078]-[0080], [0082]-[0110], tables 1-2 | 1-6 |
| A | US 2016/0062142 A1 (NOVARTIS AG) 03 March 2016 (2016-03-03) the whole document | 1-6 |
| P, X | WO 2021/187394 A1 (NOF CORPORATON) 23 September 2021 (2021-09-23) table 1 (example 1-1, etc.) | 1-6 |

☐ Further documents are listed in the continuation of Box C.

☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 June 2022** | **21 June 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/016397**

| Patent document cited in search report | Publication date (day/month/year) | Patent family member(s) | Publication date (day/month/year) |
|---|---|---|---|
| WO 2018/135421 A1 | 26 July 2018 | CN 110199219 A | |
| | | TW 201827892 A | |
| WO 2020/054711 A1 | 19 March 2020 | EP 3851900 A1<br>claims, paragraphs [0054], [0069]-[0071], [0073]-[0091], tables 1-2 | |
| | | CN 112673303 A | |
| | | KR 10-2021-0057041 A | |
| | | SG 11202102294T A | |
| | | TW 202016158 A | |
| US 2016/0062142 A1 | 03 March 2016 | WO 2016/032926 A1<br>the whole document | |
| | | EP 3186070 A1 | |
| | | KR 10-2017-0046691 A | |
| | | CN 106715101 A | |
| | | SG 11201700232S A | |
| | | SG 10201901379T A | |
| WO 2021/187394 A1 | 23 September 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2015001811 A
- JP 2014089477 A
- WO 2018135421 A
- WO 2020054711 A
- JP 2014031338 A